# EUROPÄISCHE PATENTSCHRIFT

(11) **EP 2 646 226 B1**
(45) Veröffentlichungstag und Bekanntmachung des Hinweises auf die Patenterteilung: **11.01.2017**
(21) Anmeldenummer: 11784474.6
(22) Anmeldetag: 11.11.2011
(51) Int. Cl.: B29C 70/08, B29C 70/88, B29B 11/16

(54) **UNIDIREKTIONALE FASERBÄNDER AUFWEISENDER FASERVORFORMLING AUS VERSTÄRKUNGSFASERBÜNDELN UND VERBUNDWERKSTOFF-BAUTEIL**
UNI-DIRECTIONAL FIBRE PREFORM HAVING SLIVERS AND CONSISTING OF REINFORCING FIBRE BUNDLES, AND A COMPOSITE MATERIAL COMPONENT
PRÉFORME FIBREUSE COMPRENANT DES RUBANS DE FIBRES UNIDIRECTIONNELS ET COMPOSÉE DE FAISCEAUX DE FIBRES DE RENFORCEMENT, ET ÉLÉMENT EN MATÉRIAU COMPOSITE

(30) Priorität: 02.12.2010 EP 10193489
(43) Veröffentlichungstag der Anmeldung: 09.10.2013
(73) Patentinhaber: Toho Tenax Europe GmbH, 42103 Wuppertal (DE)
(72) Erfinder: WOHLMANN, Bernd, 40627 Düsseldorf (DE); SCHNEIDER, Markus, 40237 Düsseldorf (DE); WÖGINGER, Andreas, 68305 Mannheim (DE); OBERWAHRENBROCK, Frank, 42111 Wuppertal (DE)
(74) Vertreter: Schröder, Richard
(86) Internationale Anmeldenummer: PCT/EP2011/069939
(87) Internationale Veröffentlichungsnummer: WO 2012/072405

(56) Entgegenhaltungen:
- EP-A1- 1 134 314
- WO-A1-00/43191
- WO-A1-98/29232
- DE-A1- 3 843 535
- F. C. Campbell: "Manufacturing processes for advanced composites", 2004, ELSEVIER, Oxford, UK, XP002635050, ISBN: 1856174158 Seiten 39-62, Seite 55 - Seite 56

## Beschreibung

Die vorliegende Erfindung betrifft einen Faservorformling zur Herstellung von Faserverbundstrukturen bzw. Verbundwerkstoff-Bauteilen, dessen Wand aus Verstärkungsfasern aufgebaut ist, sowie ein Verbundwerkstoff-Bauteil aus einem solchen Faservorformling.

Insbesondere im Bereich der Luft- und Raumfahrtindustrie, aber auch z.B. im Bereich des Maschinenbaus, werden in zunehmendem Maße Bauteile aus Faserverbundwerkstoffen eingesetzt. Faserverbundwerkstoffe bieten gegenüber Metall oftmals den Vorteil eines geringeren Gewichts und/oder höherer Festigkeiten. Ein wesentlicher Aspekt ist dabei gleichzeitig eine kostengünstige Herstellung von derartigen belastbaren und dennoch leichtgewichtigen Verbundwerkstoff-Bauteilen. Im Hinblick auf die Belastbarkeit, d.h. im Hinblick auf die Steifigkeit und die Festigkeit haben bei den Verbundwerkstoff-Bauteilen der Volumenanteil der Verstärkungsfasern und insbesondere auch die Ausrichtung der Verstärkungsfasern maßgeblichen Einfluss.

Ein häufig eingesetztes Fertigungsverfahren basiert derzeit auf der sogenannten Prepregtechnologie. Hierbei werden die Verstärkungsfasern wie z.B. Glasfasern oder Kohlenstofffasern beispielsweise zueinander parallel angeordnet, in ein Matrixharz eingebettet und zu bahnförmigen Halbzeugen verarbeitet. Für die Bauteilfertigung werden diese Bahnen entsprechend der Bauteilkontur zugeschnitten und maschinell oder von Hand Schicht für Schicht unter Berücksichtigung der für die Bauteilbelastungen erforderlichen Orientierung der Verstärkungsfasern in ein Werkzeug laminiert. Anschließend erfolgt die Aushärtung der Matrix unter Druck und Temperatur in einem Autoklaven. Derartige Fertigungsverfahren sind für viele Bauteile jedoch sehr aufwändig und teuer.

In einem weiteren Verfahren werden aus Verstärkungsfasern sogenannte Faservorformlinge ("Preforms") hergestellt. Im Wesentlichen handelt es sich hierbei um textile Halbzeuge in Form von zwei- oder dreidimensionalen Gebilden aus Verstärkungsfasern, in die in weiteren Schritten zur Herstellung des Faserverbundbauteils ein geeignetes Matrixmaterial über Infusion oder Injektion, auch unter Anwendung von Vakuum eingebracht wird. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT). Das für die Herstellung der Faservorformlinge verwendete Fasermaterial kann auch bereits z.B. mit geringen Mengen eines aushärtbaren Kunststoffmaterials, d.h. eines Bindermaterials, vorimprägniert sein, um die Fixierung der Verstärkungsfasern im Faservorformling zu verbessern. Derartige vorimprägnierte Garne werden beispielsweise in der WO 2005/095080 beschrieben.

Zur Herstellung solcher Faservorformlinge wurde bereits in der WO 98/22644 vorgeschlagen, kurzgeschnittene Verstärkungsfasern zusammen mit einem Bindermaterial auf einen der Gestalt des gewünschten Faservorformlings angepassten luftdurchlässigen Schirm zu dispergieren und unter Anlegen von Vakuum auf dem Schirm zu halten, bis nach Abkühlung des Bindermaterials eine ausreichende Stabilität des Vorformlings erreicht ist. Bei dieser Vorgehensweise werden die Verstärkungsfasern in zufälliger, isotroper Anordnung und Ausrichtung angeordnet. Dies ist zwar von Vorteil, wenn die Belastungsrichtungen im Bauteil nicht vorausgesagt werden können, hat jedoch gleichzeitig den Nachteil, dass wegen der isotropen Ausrichtung immer nur ein Bruchteil der Fasern in Belastungsrichtung liegt. Eine Anpassung an besondere Beanspruchungsrichtungen im Bauteil ist bei diesem Verfahren also nicht möglich. Verstärkungen in der Bauteilwand können höchstens über z.B. lokal erhöhte Wandstärken aufgefangen werden, die jedoch mit einer Gewichtszunahme des Bauteils verbunden sind. Darüber hinaus werden gemäß den Beispielen der WO 98/22644 nur Faservolumenanteile im Bereich bis ca. 15 Vol.-% erreicht, und damit wegen der niedrigen Faservolumenanteile nur vergleichsweise geringe dickenbezogene Bauteilfestigkeiten. Üblicherweise werden bei derartigen Bauteilen mit zufälliger Orientierung der Verstärkungsfasern Faseranteile von maximal 30 Vol.-% erzielt.

In der US 2010/0126652 A1 und der US 2009/0229761A1 wird ein Verfahren bzw. eine Vorrichtung zur Herstellung von Faservorformlingen beschreiben, mittels dessen es möglich ist, der Forderung nach einer belastungsgerechten Faserausrichtung im Bauteil nachzukommen. Hierbei kommt ein sogenanntes TFP-Verfahren ("Tailored Fiber Placement Verfahren") zum Einsatz, bei dem Garne oder Faserstränge entlang beliebiger, auf den auf das fertige Bauteil einwirkenden Kraftfluss hin angepasster Bahnkurven abgelegt und mittels Fixierfäden vorfixiert werden, wobei hierfür CNC-gesteuerte Näh- und Strickautomaten eingesetzt werden. Die US 2009/0229760 A1 beschreibt eine für solche TFP-Verfahren geeignete Ablegevorrichtung für die Faserstränge. Bei diesen TFP-Verfahren sind eine verbesserte Ausnutzung der mechanischen Belastbarkeit der Verstärkungsfasern und eine verbesserte Anpassung der Bauteilquerschnitte an die jeweiligen lokalen Belastungen im Bauteil möglich. Allerdings sind diese Verfahren insbesondere bei der Herstellung von Faservorformlingen mit komplexen dreidimensionalen Strukturen sehr aufwändig und kostenintensiv.

Alternativ zur Fixierung der Faserstränge mittels textiler Verfahren, wie z.B. mittels Näh- oder Strickverfahren, können die Faserstränge auch mittels eines thermisch aktivierbaren Bindermaterials, beispielsweise mittels eines Thermoplasten, fixiert werden, wie dies in der DE 10 2007 012 608 B4 beschrieben wird.

Eine weitere Möglichkeit der Herstellung von Faservorformlingen besteht in der Verwendung von sogenannten Multiaxialgelegen. Unter Multiaxialgelegen werden Aufbauten aus mehreren übereinander angeordneten Fadenlagen verstanden, wobei die Fadenlagen aus Scharen von zueinander parallel angeordneten Verstärkungsfäden bestehen. Die übereinander angeordneten Fadenlagen können über eine Vielzahl von nebeneinander angeordneten und parallel zueinander verlaufenden und Maschen ausbildenden Näh- oder Wirkfäden miteinander verbunden und gegeneinander fixiert werden, so dass das multiaxiale Gelege auf diese Weise stabilisiert wird. Die Fadenlagen sind so übereinander gelegt, dass die Verstärkungsfasern der Lagen zueinander parallel oder wechselweise kreuzend (z.B. - 45°; 0°; + 45°) ausgerichtet sind.

Derartige Multiaxialgelege werden ohne Matrixmaterial in eine Form gelegt und z.B. zum Umformen unter erhöhter Temperatur an deren Kontur angepasst. Anschließend wird das zur Herstellung des Verbundbauteils erforderliche Matrixmaterial über Infusion oder Injektion in die Form und in den Faservorformling eingebracht, wonach nach Aushärten des Matrixmaterials das Verbundbauteil erhalten wird. Multiaxialgelege und ihre Verwendung zur Herstellung von Faservorformlingen werden beispielsweise in der EP 0 361 796 B1, der EP 1 352 118 B1 oder der WO 98/10128 beschrieben.

Multiaxialgelege sind jedoch aufwändig in ihrer Herstellung und werden im allgemeinen in Standardbreiten hergestellt, die selten den Abmessungen des späteren Bauteils entsprechen. Hieraus resultiert ein nicht unerheblicher Anteil an Verschnitt. Darüber hinaus sind sie insbesondere bei komplexen Bauteilkonturen und vor allem bei Bauteilen mit kleinen Krümmungsradien nur eingeschränkt einsetzbar, da die Multiaxialgelege nicht beliebig drapierbar sind. Außerdem wurde beobachtet, dass die Näh- bzw. Wirkfäden vielfach zu einer Reduzierung der Schlagzähigkeit des resultierenden Verbundwerkstoffes führen können. Schließlich kann auch die spätere Infusion oder Injektion des Matrixmaterials über das Liquid Molding oder verwandte Verfahren verlangsamt sein.

Zur Vermeidung von Nähten und Querfäden schlägt die US 2008/0085650 A1 vor, Verstärkungsmaterialstrukturen mit einem Lagenaufbau zu verwenden, die eine Lage parallel ausgerichteter kontinuierlicher Verstärkungsfasern sowie eine Lage aus z.B. einem Vlies, einem Gewebe oder aus Faserkurzschnitt umfassen, wobei die Lagen über einen Kleber oder über Klebestellen miteinander verbunden sind. Auch diese Materialien liegen zunächst in Standardbreiten vor, die entsprechend der Bauteilgeometrie zugeschnitten werden müssen. Auf diese Weise entstehen erhöhte Kosten durch zusätzliche Schritte, etwa Schneiden, Drapieren und Verbinden, sowie ein durchschnittlicher Verschnitt von bis zu 30 % des Ausgangsmaterials.

Die WO 98/29232 offenbart Verbundwerkstoff-Bauteile, die über einen Formpress-Prozess hergestellt werden. Dabei werden kontinuierliche strangförmige Materialien aus Verstärkungsfasern in eine Form gelegt und ein Verbundwerkstoffmaterial, welches diskontinuierliche Verstärkungsfasern enthält, hinzugefügt. Anschließend erfolgt eine Verpressung zum Bauteil. Bei den diskontinuierlichen Verstärkungsfasern handelt es sich um diskrete, diskontinuierliche Fasern, die im Matrixmaterial zufällig angeordnet und zufällig orientiert sind.

In der EP 1 134 314 A1 wird ein bahnförmiges Verbundwerkstoff-Zwischenprodukt beschrieben, die zur späteren Herstellung entsprechender Bauteile geeignet ist. Das bahnförmige Zwischenprodukt ist ausschließlich aus Segmenten aus Verstärkungsfasern, d.h. aus Verstärkungsfaserbündeln aufgebaut, die in zufälliger, isotroper Anordnung auf einem Träger abgelegt sind. Die Faserbündel weisen nach den Angaben der EP 1 134 314 A1 einen Harzgehalt von mindestens 15 Gew.-% auf (und eine Länge im Bereich zwischen 10 und 100 mm.

Es ist Aufgabe der vorliegenden Erfindung, einen Faservorformling bereitzustellen, der für eine Vielzahl von Bauteilkonturen Verwendung finden kann, bei dem insbesondere eine verbesserte Anpassung an die jeweiligen lokalen Belastungen im Bauteil möglich ist und der kostengünstig hergestellt werden kann.

Die Aufgabe wird gelöst durch einen Faservorformling zur Herstellung von Faserverbundstrukturen, dessen Wand aus Verstärkungsfasern aufgebaut ist,
- wobei die Wand eine erste Oberfläche und eine der ersten Oberfläche gegenüberliegende zweite Oberfläche und eine sich zwischen den Oberflächen erstreckende Dicke besitzt und durch Kanten begrenzt ist,
- wobei die Wand mindestens eine erste Zone aus eine erste Harzzusammensetzung aufweisenden Verstärkungsfaserbündeln und mindestens eine zweite Zone aus mindestens einem Faserband, bestehend aus mindestens einem eine zweite Harzzusammensetzung aufweisenden, unidirektional ausgerichteten Verstärkungsgarnstrang, umfasst,
- wobei die Verstärkungsfaserbündel in der mindestens einen ersten Zone in einer Betrachtungsrichtung parallel zur Dickenerstreckung in unterschiedliche Raumrichtungen zueinander orientiert sind,
- wobei jedes Verstärkungsfaserbündel aus parallel zueinander ausgerichteten Verstärkungsfaserfilamenten besteht, eine Länge im Bereich von 3 bis 50 mm hat und die erste Harzzusammensetzung in einer Konzentration im Bereich von 1 bis 10 Gew.-%, bezogen auf das Fasergewicht, enthält,
- wobei die Wand des Faservorformlings einen Anteil an Verstärkungsfasern von mehr als 35 Vol.-% aufweist und
- wobei die mindestens eine zweite Zone in einer Betrachtungsrichtung senkrecht zur Dickenerstreckung der Wand einen diskreten Bereich ausbildet und mindestens ein Faserband an mindestens einem seiner Enden innerhalb der Wand endet.

Mit dem erfindungsgemäßen Faservorformling lässt sich auf einfache Weise eine Faserverbundstruktur bzw. ein Verbundwerkstoff-Bauteil herstellen. Hierzu kann der erfindungsgemäße Faservorformling in eine endkonturnahe Form eingelegt mittels üblicher Verfahren ein Matrixmaterial in die Form und damit in den Faservorformling über Infusion, Infiltration oder Injektion eingebracht werden und anschließend unter Härtung des Matrixmaterials das Verbundwerkstoff-Bauteil ausgebildet wird. Die Erfindung betrifft daher auch ein Verbundwerkstoff-Bauteil, dessen Wand aus in einer Polymermatrix eingebetteten Verstärkungsfasern aufgebaut ist,
- wobei die Wand eine erste Oberfläche und eine der ersten Oberfläche gegenüberliegende zweite Oberfläche und eine sich zwischen den Oberflächen erstreckende Dicke besitzt und durch Kanten begrenzt ist,
- wobei die Wand mindestens eine erste Zone aus Verstärkungsfaserbündeln und mindestens eine zweite Zone aus mindestens einem Faserband, bestehend aus mindestens einem unidirektional ausgerichteten Verstärkungsgarnstrang, umfasst,
- wobei die Verstärkungsfaserbündel in der mindestens einen ersten Zone in einer Betrachtungsrichtung parallel zur Dickenerstreckung in unterschiedliche Raumrichtungen zueinander orientiert sind,
- wobei jedes Verstärkungsfaserbündel aus parallel zueinander ausgerichteten Verstärkungsfaserfilamenten besteht und eine Länge im Bereich von 3 bis 50 mm hat,
- wobei die Wand des Faservorformlings einen Anteil an Verstärkungsfasern von mehr als 35 Vol.-% aufweist und
- wobei die mindestens eine zweite Zone in einer Betrachtungsrichtung senkrecht zur Dickenerstreckung der Wand einen diskreten Bereich ausbildet und mindestens ein Faserband an mindestens einem seiner Enden innerhalb der Wand endet.

Der Faservorformling bzw. das Verbundwerkstoff-Bauteil weist also innerhalb seiner Wand mindestens eine erste Zone aus Verstärkungsfaserbündeln und mindestens eine zweite Zone aus mindestens einem Faserband auf. Hierbei kann die erste Zone innerhalb der Wand einen durchgehenden, kontinuierlichen Bereich ausbilden, in den z.B. eine oder mehrere zweite Zonen eingebettet sind. Dabei können die zweiten Zonen innerhalb der Wand angeordnet sein, d.h. bei Betrachtung senkrecht zur Dickenerstreckung der Wand Inseln ausbilden. Die zweiten Zonen können aber in einer bevorzugten Ausführungsform auch im Bereich einer der Oberflächen auf der ersten Zone angeordnet sein, d.h., das mindestens eine Faserband ist in diesem Fall auf eine der Oberflächen z.B. aufkaschiert. Es ist jedoch auch möglich, dass eine zweite Zone sich über die gesamte Wanddicke erstreckt und dabei seitlich von ersten Zonen begrenzt wird. Auf jeden Fall bildet die mindestens eine zweite Zone in einer Betrachtungsrichtung senkrecht zur Dickenerstreckung der Wand einen diskreten Bereich aus, d.h. die mindestens eine zweite Zone bildet in dieser Betrachtungsrichtung keinen durchgehenden, d.h. keinen kontinuierlichen Bereich aus. Wie ausgeführt kann allein die mindestens eine erste Zone sich über die gesamte Wand erstrecken, also einen durchgehenden, kontinuierlichen Bereich ausbilden. In einer bevorzugten Ausführungsform des erfindungsgemäßen Faservorformlings bildet die mindestens eine erste Zone innerhalb der Wand einen durchgehenden Bereich aus Verstärkungsfaserbündeln aus und die Wand umfasst mindestens eine in und/oder auf dem durchgehenden Bereich aus Verstärkungsfaserbündeln angeordnete diskrete zweite Zone.

In der mindestens einen ersten Zone sind die Verstärkungsfaserbündel in einer Betrachtungsrichtung parallel zur Dickenerstreckung in unterschiedliche Raumrichtungen zueinander orientiert, d.h. die Verstärkungsfasern sind in der mindestens einen ersten Zone in den Raumrichtungen senkrecht zur Dickenerstreckung isotrop verteilt bzw. orientiert. Dabei wird unter isotrop verstanden, dass innerhalb der einzelnen Verstärkungsfaserbündel zwar eine anisotrope Orientierung der Fasern vorliegt. Die Bündel in ihrer Gesamtheit zeigen jedoch keine bevorzugte Orientierung, sondern sind in die genannten Raumrichtungen isotrop orientiert. Insbesondere bei dickeren Wänden oder dickeren Schichtstärken der ersten Zonen kann auch eine isotrope Verteilung unter Einbeziehung der sich in Richtung der Dicke der Wand erstreckende Raumrichtung vorliegen, d.h. der Faservorformling bzw. das Verbundwerkstoff-Bauteil kann in der mindestens einen ersten Zone eine in alle drei Raumrichtungen isotrope Struktur aufweisen.

Erfindungsgemäß besteht jedes Verstärkungsfaserbündel aus parallel zueinander ausgerichteten Verstärkungsfaserfilamenten und hat eine Länge im Bereich von 3 bis 50 mm. Vorzugsweise liegt die Länge im Bereich von 10 bis 50 mm. Mit Blick auf die erreichbaren Anteile an Verstärkungsfasern in der mindestens einen ersten Zone, insbesondere zur Erzielung von Anteilen der Verstärkungsfasern oberhalb von 40 Vol.-%, ist es von Vorteil, wenn die Wand des erfindungsgemäßen Faservorformlings bzw. des Verbundwerkstoff-Bauteils in der mindestens einen ersten Zone mehrere Gruppen von Verstärkungsfaserbündel mit voneinander verschiedenen Längen aufweist, so dass insgesamt die Länge der Verstärkungsfaserbündel eine Verteilung aufweist. Beispielsweise können Verstärkungsfaserbündel mit einer Länge von 20, 30 und 50 mm miteinander kombiniert sein bzw. werden.

Die Verstärkungsfaserbündel können aus üblichen Filamentgarnen mit z.B. 500 bis 50.000 Verstärkungsfaserfilamenten bestehen. Es ist aber von Vorteil, wenn jedes Verstärkungsfaserbündel aus 500 bis 24000 Verstärkungsfaserfilamenten besteht. Zur Erzielung einer möglichst homogenen Verteilung der Verstärkungsfaserbündel in der mindestens einen ersten Zone und zur Erzielung möglichst hoher Faseranteile liegt die Anzahl der Verstärkungsfaserfilamente in den Verstärkungsfaserbündeln besonders bevorzugt im Bereich 500 bis 6000 und ganz besonders bevorzugt im Bereich von 1000 bis 3000.

Zur Erzielung hoher Faservolumenanteile in der mindestens einen ersten Zone, insbesondere zur Erzielung von Anteilen der Verstärkungsfasern oberhalb von 40 Vol.-%, hat es sich ebenfalls als vorteilhaft herausgestellt, wenn die Wand mehrere Gruppen von Verstärkungsfaserbündel mit voneinander verschiedenen Anzahlen von Verstärkungsfaserfilamenten aufweist, da sich damit hohe Packungsdichten der Bündel in der mindestens einen ersten Zone realisieren lassen. Beispielsweise können Verstärkungsfaserbündel mit 3000, 6000 und 12000 Verstärkungsfaserfilamenten kombiniert werden.

Für die Erzielung hoher Packungsdichten der Bündel, d.h. zur Erzielung hoher Faservolumenanteile in der mindestens einen ersten Zone von oberhalb von 40 Vol.-%, ist es des Weiteren von Vorteil, wenn die Verstärkungsfaserbündel einen möglichst flachen Querschnitt senkrecht zur Erstreckung der Verstärkungsfaserfilamente im Bündel aufweisen. Vorzugsweise liegen die Verstärkungsfaserbündel bändchenförmig vor und weisen ein Verhältnis von Bündelbreite zu Bündeldicke von mindestens 25 auf. Besonders bevorzugt liegt das Verhältnis von Bündelbreite zu Bündeldicke im Bereich 30 bis 150.

Durch geeignete Auswahl von Verstärkungsfaserbündeln hinsichtlich ihres Verhältnisses von Bündelbreite zu Bündeldicke, hinsichtlich ihrer Länge sowie hinsichtlich der Anzahl der Verstärkungsfaserfilamente lassen sich besonders hohe Packungsdichten der Verstärkungsfaserbündel und damit besonders hohe Faservolumenanteile in der mindestens einen ersten Zone realisieren. In einer ganz besonders bevorzugten Ausführungsform des Faservorformlings bzw. des Verbundwerkstoff-Bauteils weisen die in der Wand des Faservorformlings bzw. des Verbundwerkstoff-Bauteils im Bereich der mindestens einen ersten Zone angeordneten Verstärkungsfaserbündel neben einem flachen Querschnitt unterschiedliche Längen und unterschiedliche Anzahlen an Verstärkungsfaserfilamenten auf. Dies führt zu besonders hohen Faservolumenanteilen in der Wand des Vorformlings bzw. Bauteils. Erfindungsgemäß weist die Wand des Faservorformlings bzw. des Verbundwerkstoff-Bauteils über ihre Erstreckung hinweg, d.h. an jeder Stelle ihrer Erstreckung, einen Anteil an Verstärkungsfasern von mindestens 35 Vol.-%, bevorzugt einen Anteil an Verstärkungsfasern von mindestens 40 Vol.-% und besonders bevorzugt von 45 Vol.-% auf. In besonderem Maße ist von Vorteil, wenn der Anteil an Verstärkungsfasern mindestens 50 Vol.-% beträgt, da dies zu hervorragenden mechanischen Eigenschaften im Verbundwerkstoff-Bauteil führt. Dabei erlaubt die Vorimprägnierung der Verstärkungsfaserbündel mit der ersten Harzzusammensetzung eine kompakte, stabile Ablage dieser Verstärkungsfaserbündel bei der Herstellung des Faservorformlings, womit die Realisierung solch hoher Faservolumenanteile unterstützt wird.

Der Anteil an Verstärkungsfasern in der Wand des Faservorformlings lässt sich in Anlehnung an DIN EN 2564:1998 bestimmen. Hierzu wird der Faservorformling nach gängigen Verfahren mit einem bei Epoxidharz wie z.B. HexFlow RTM 6 (Fa. Hexcel) getränkt und zu einem Verbundwerkstoff ausgehärtet. Aus dem ausgehärteten Verbundwerkstoff werden Probekörper herausgeschnitten, an denen dann nach den Vorschriften der DIN EN 2564:1998 Masse und Dichte sowie nach Behandlung mit konzentrierter Schwefelsäure zur Abtrennung des Matrixharzes die Masse der im Probekörper enthaltenen Fasern ermittelt werden. Nach den Vorschriften der DIN EN 2564:1998 kann damit zunächst der Fasermasseanteil und resultierend daraus der Faservolumenanteil bzw. der Anteil an Verstärkungsfasern ermittelt werden. Diese Methode kann auch zur Ermittlung des Faservolumenanteils bei den Verbundwerkstoff-Bauteilen angewendet werden.

Die Verstärkungsfaserbündel im Faservorformling weisen erfindungsgemäß einen auf den Faseranteil bezogenen Gehalt an einer ersten Harzzusammensetzung im Bereich 1 bis 10 Gew.-% auf. Hierdurch wird den Faserbündeln eine ausreichende Stabilität verliehen und ein Auseinanderfallen in einzelne Filamente oder einzelne Gruppen von Filamenten vermieden. Gleichzeitig ist bei den erfindungsgemäßen Harzaufträgen gewährleistet, dass die Verstärkungsfaserbündel bei der Ausbildung des Faservorformlings aneinander haften und der Faservorformling so eine für die weitere Handhabung ausreichende Stabilität erlangt. Ein derartiger Harzauftrag wird vielfach auch als Binder bzw. als Behinderung bezeichnet. Wie bereits ausgeführt wurde, wird das eigentliche, für die Ausbildung des Verbundbauteils noch erforderliche Matrixmaterial erst in einem späteren Arbeitsgang durch Infusion oder Injektion in den Vorformling eingebracht. Vorzugsweise enthalten die Verstärkungsfaserbündel im Faservorformling die erste Harzzusammensetzung in einer Konzentration im Bereich von 2 bis 7 Gew.-%, bezogen auf den Faseranteil.

Bei der ersten Harzzusammensetzung kann es sich um Bindermaterial handeln, das die obengenannten Aufgaben erfüllt. In einer vorteilhaften Ausgestaltung der Erfindung handelt es sich bei der ersten Harzzusammensetzung um ein thermisch aktivierbares Bindermaterial, beispielsweise um einen Thermoplast. Bevorzugt ist jedoch ein Bindermaterial auf Basis von Epoxidharzen, wobei das Bindermaterial mehrfach aufschmelzbar ist und durch Abkühlen auf Raumtemperatur in den festen Zustand überführbar ist. Derartige Harzzusammensetzungen bzw. Verstärkungsfasern, welche solche Harzzusammensetzungen aufweisen, werden beispielsweise in der WO 2005/095080 offenbart. Auch die WO 98/22644 beschreibt derartige als Binder geeignete Harzzusammensetzungen.

Das mindestens eine Faserband auf oder innerhalb der mindestens einen zweiten Zone und damit die mindestens eine zweite Zone selbst ist z.B. in Bereichen besonders hoher Beanspruchungen im späteren, aus dem Faservorformling hergestellten Bauteil bzw. im erfindungsgemäßen Verbundwerkstoff-Bauteil angeordnet und entsprechend den dort vorherrschenden Beanspruchungsrichtungen orientiert. Das mindestens eine Faserband ist also vorzugsweise in der Wand des Faservorformlings bzw. des Verbundwerkstoff-Bauteils kraftflussorientiert angeordnet bzw. belastungsgerecht ausgerichtet. Dabei kann sich das mindestens eine Faserband bzw. können sich die Faserbänder von einer Seite bzw. Kante der Wand des Faservorformlings bzw. des Verbundwerkstoff-Bauteils bis zu einer anderen Seite oder Kante des Faservorformlings bzw. des Verbundwerkstoff-Bauteils und somit über die gesamte Ausdehnung in diesem Bereich erstrecken. Dabei können die Kanten den äußeren Umfang des Faservorformlings definieren, sie können sich aber auch im Inneren des Faservorformlings durch Aussparungen, Durchlässe , Auskragungen o.ä. ergeben.

Der erfindungsgemäße Faservorformling zeichnet sich insbesondere dadurch aus, dass er flexibel an lokale Beanspruchungen in dem aus dem Faservorformling herzustellenden Bauteil anpassbar ist. Daher weist der Faservorformling in einer Ausführungsform mindestens ein Faserband auf, das an mindestens einem seiner Enden innerhalb der Wand endet, sich also nicht von einer Kante des Faservorformlings zu einer anderen Kante erstreckt. Ein Faserband oder mehrere Faserbänder erstrecken sich also nur über Teile der jeweiligen Ausdehnung bzw. Erstreckung der Wand in Richtung dieses einen Faserbands bzw. dieser Faserbänder, bildet bzw. bilden also inselförmige oder halbinselförmige Bereiche aus. Die Enden eines Faserbandes entsprechen dabei den Enden des dieses Faserband aufbauenden mindestens einen unidirektional ausgerichteten Verstärkungsgarnstrangs. Beispielsweise ist es auch möglich, dass im Falle, dass ein Faservorformling bzw. ein Verbundwerkstoff-Bauteil eine Auskragung zur Ausbildung eines Stutzens aufweist, nur im Bereich der Auskragung Faserbänder als Verstärkung aufgebracht sind. Dabei können die Faserbänder bzw. kann mindestens ein Faserband auch in einer gekrümmten Bahn verlaufen bzw. abgelegt sein.

Bevorzugt weist das mindestens eine Faserband eine Länge von mindestens 7 cm und besonders bevorzugt von mindestens 10 cm auf. Bei geringeren Längen ist die Krafteinleitung in die Faserbänder in einem Bauteil unzureichend. Außerdem gestaltet sich die Handhabung kürzerer Faserbänder insbesondere auch bei einer automatisierten Ablage, wie sie beispielsweise in der DE 10 2007 012 608 B4 beschrieben wird, schwierig. Besonders bevorzugt weist das mindestens eine Faserband eine Länge von mindestens 20 cm auf. Wie zuvor ausgeführt wurde, ergibt sich im Einzelfall eine Obergrenze der Faserbandlänge aus der Bauteilgeometrie.

Das mindestens eine Faserband kann z.B. aus einem einzelnen gespreizten und flachgelegten multifilen Verstärkungsgarn, d.h. aus einem einzelnen Verstärkungsgarnstrang bestehen. Bevorzugt besteht das mindestens eine Faserband jedoch aus mehreren nebeneinander und zueinander parallel angeordneten Verstärkungsgarnsträngen.

Dabei kann in einer Ausführungsform des erfindungsgemäßen Faservorformlings bzw. des Verbundwerkstoff-Bauteils die mindestens eine zweite Zone aus einen einzelnen Faserband bestehen, welches auch aus mehreren nebeneinander und übereinander abgelegten multifilen Verstärkungsgarnen bestehen kann. Vorzugsweise umfasst die mindestens eine zweite Zone jedoch mehrere in Lagen übereinander angeordnete Faserbänder, wobei sich die Anzahl der Lagen sowie deren Breite aus den jeweiligen Beanspruchungen im späteren Bauteil ergeben.

Wie ausgeführt, ist auf Grund der spezifischen Ausgestaltung des erfindungsgemäßen Faservorformlings eine belastungsgerechte Auslegung des Faservorformlings sowie der daraus hergestellten Bauteile auf einfache Weise möglich. Dies wird vorliegend dadurch erreicht, dass das mindestens eine Faserband vorzugsweise in der Wand des Faservorformlings bzw. des Verbundwerkstoff-Bauteils kraftflussorientiert angeordnet bzw. belastungsgerecht ausgerichtet ist. In einer Ausführungsform umfasst daher die Wand des Faservorformlings bzw. des Verbundwerkstoff-Bauteils mindestens zwei Faserbänder und die Orientierung des mindestens einen unidirektional ausgerichteten Verstärkungsgarnstrangs mindestens eines Faserbands ist gegenüber der Orientierung des mindestens einen unidirektional ausgerichteten Verstärkungsgarnstrangs eines anderen Faserbands verschieden. In einer Ausführungsform können dabei innerhalb einer zweiten Zone übereinander in Lagen angeordnete Faserbänder bzw. die sie aufbauenden, innerhalb der Faserbänder unidirektional ausgerichteten Verstärkungsgarnstränge unterschiedliche Orientierungen aufweisen. Im Falle mehrerer zweiter Zonen auf und/oder in der Wand des Faservorformlings bzw. des Verbundwerkstoff-Bauteils können in einer weiteren Ausführungsform Faserbänder unterschiedlicher zweiter Zonen bzw. die die Faserbänder aufbauenden, innerhalb der Faserbänder unidirektional ausgerichteten Verstärkungsgarnstränge unterschiedlicher zweiter Zonen unterschiedliche Orientierungen aufweisen. Die unterschiedlich orientierten Verstärkungsgarnstränge können beispielsweise einen Winkel α im Bereich 5° bis 175° und bevorzugt zwischen 20°und 160° zueinander ausbilden. Natürlich sind auch Ausführungsformen umfasst, bei denen Faserbänder innerhalb einer zweiten Zone und unterschiedlicher zweiter Zonen unterschiedliche Orientierungen zueinander aufweisen.

In einer weiteren bevorzugten Ausführungsform ist mindestens ein unidirektional ausgerichteter Verstärkungsgarnstrang mindestens eines Faserbands bzw. mindestens ein Faserband bezüglich seiner Längserstreckung zu keiner der Kanten des Faservorformlings bzw. des Verbundwerkstoff-Bauteils parallel ausgerichtet.

Erfindungsgemäß weisen die unidirektional ausgerichteten Verstärkungsgarnstränge bzw. das mindestens eine Faserband eine zweite Harzzusammensetzung auf. Hierdurch wird ein sicheres Ablegen und Fixieren des mindestens einen Faserbands ermöglicht und eine Stabilisierung des Faservorformlings erreicht. Je nach Anwendung kann es sich bei dem Faserband auch um ein sogenanntes unidirektionales Prepreg handeln, bei dem unidirektional ausgerichtete Verstärkungsfasern bereits mit Matrixharz getränkt sind und die Konzentration des Matrixharzes im Prepreg im wesentlichen bereits der Konzentration im Bauteil entspricht, d.h. im Bereich von ca. 25 bis 45 Gew.-% liegt. Bevorzugt weist das mindestens eine Faserband des erfindungsgemäßen Faservorformlings die zweite Harzzusammensetzung jedoch in einer Konzentration von 1 bis 10 Gew.-%, bezogen auf den Faseranteil, auf. Die zweite Harzzusammensetzung wirkt dann also ebenfalls als Bindermaterial. Bei derartigen Konzentrationen ist zum einen die zuvor erwähnte gute Handhabbarkeit und Fixierung gewährleistet. Zum anderen weist das mindestens eine Faserband eine ausreichende Flexibilität auf und bei der späteren Bauteilfertigung ist eine gute Infiltrierbarkeit mit dem Matrixharz gegeben.

Der Anteil an Verstärkungsfasern in dem mindestens einen Faserband der mindestens einen zweiten Zone des Faservorformlings sollte kleiner als 70 Vol.-% sein, damit im fertigen Bauteil nach der Infiltrierung mit Matrixharz eine im wesentlichen vollständige Einbettung der Verstärkungsfasern im Matrixharz gewährleistet ist. Andererseits sollte der Faseranteil möglichst hoch sein, damit bei gegebenem Volumen eine möglichst hohe Verstärkungswirkung erzielt wird. Nicht zuletzt auch unter dem Gesichtspunkt der praktischen Handhabbarkeit haben sich Volumenanteile an Verstärkungsfasern in dem mindestens einen Faserband des Faservorformlings bzw. des Verbundwerkstoff-Bauteils im Bereich von 40 bis 65 Vol.-% und vorzugsweise im Bereich von 50 bis 65 Vol.-% als geeignet erwiesen.

Bei der zweiten Harzzusammensetzung kann es sich, wie bei der ersten Harzzusammensetzung, um ein thermisch aktivierbares Bindermaterial, beispielsweise um einen Thermoplast handeln. Bevorzugt ist ebenfalls ein Bindermaterial auf Basis von Epoxidharzen, wobei das Bindermaterial mehrfach aufschmelzbar ist und durch Abkühlen auf Raumtemperatur in den festen Zustand überführbar ist. Auch bzgl. der zweiten Harzzusammensetzungen bzw. bzgl. der Faserbänder, welche diese Harzzusammensetzungen aufweisen, kann beispielsweise auf die in der WO 2005/095080 offenbarten Garne und Harzzusammensetzungen zurückgegriffen werden. Vorzugsweise sind die erste Harzzusammensetzung und die zweite Harzzusammensetzung chemisch ähnlich und besonders bevorzugt gleich. Geeignete Harzzusammensetzungen bzw. Bindermaterialien werden z.B. auch in der bereits erwähnten WO 98/22644 beschrieben.

Bei den im erfindungsgemäßen Faservorformling bzw. im erfindungsgemäßen Verbundwerkstoff-Bauteil eingesetzten Verstärkungsfasern bzw. Verstärkungsfasergarnen kann es sich um solche auf Basis von Kohlenstoff, Glas, Aramid, Keramik, Bor, Stahl oder von synthetischen Polymeren wie z.B. Polyamid, Polyhydroxyether, Polyethylen, insbesondere UHMW-Polyethylen, oder Polyester, handeln oder um eine Kombination dieser Materialien, beispielsweise in Form von Mischgarnen (co-mingled yarns). In einer bevorzugten Ausführungsform sind die Verstärkungsfasern der Verstärkungsfaserbündel und/oder der Verstärkungsgarnstränge des mindestens einen Faserbandes Kohlenstofffasern. Hierbei kann es sich um solche Kohlenstofffasern handeln, die aus Pech-, Polyacrylnitril oder Viskosevorprodukten gewonnen wurden.

Die Kombination von isotrop ausgerichteten Verstärkungsfaserbündeln und kraftflussorientiert ausgerichteten Faserbändern bzw. Verstärkungsgarnsträngen erlaubt eine kostengünstige und gleichzeitig eine an die spezifischen Beanspruchungen im späteren Bauteil angepasste Fertigung von Faservorformlingen. So können die ersten Zonen mit Verstärkungsfaserbündel z.B. über sogenannte Faserspritzverfahren kostengünstig ausgebildet werden, bei denen mit der ersten Harzzusammensetzung beaufschlagte Verstärkungsfasergarne einem Schneidkopf zugeführt, zu entsprechend bemessenen Bündeln mit der gewünschten Länge zugeschnitten und anschließend in eine der Endkontur des Faservorformlings angepasstes Werkzeug gespritzt werden. Alternativ kann auch eine Schüttung aus entsprechenden Verstärkungsfaserbündeln in dem Werkzeug abgelegt werden. In beiden Fällen kann die Positionierung der Verstärkungsfaserbündel durch Anlegen von Vakuum an das Werkzeug unterstützt werden, das in diesem Fall perforiert ist.

Gleichzeitig oder auch z.B. nachfolgend können in Bereichen, in denen es im späteren Bauteil zu erhöhten Belastungen kommt, in Richtung der Belastungen orientiert Faserbänder abgelegt werden, wobei hierfür im Stand der Technik bekannte Verfahren eingesetzt werden können, wie z. B. das in der WO 2007/101578 offenbarte Ablegeverfahren unter Einsatz eines Flammspritzverfahrens zum Aufbringen der zweiten Harzzusammensetzung während des Ablegens oder das in der DE 10 2007 012 608 B4 offenbarte Verfahren, bei dem Faserbänder bzw. Verstärkungsgarnstränge, die mit einem thermisch aktivierbaren Bindermaterial, beispielsweise mit einem Thermoplast, also einer zweiten Harzzusammensetzung, versehen sind, mittels automatisierter Ablegevorrichtungen über einem Legekopf positioniert werden. Derartige Verfahren sind auch unter der Bezeichnung "Fiber-Placement-Verfahren" bekannt.

Auf diese Weise können im Unterschied zu Faservorformlingen des Stands der Technik mittels der vorliegenden Erfindung Faservorformlinge mit im Prinzip jeder beliebigen ebenen bzw. zweidimensionalen Oberflächengeometrie oder vorzugsweise mit einer von der ebenen Oberflächengeometrie abweichenden dreidimensionalen Oberflächengeometrie bereitgestellt werden. Der erfindungsgemäße Faservorformling und auch das erfindungsgemäße Verbundwerkstoff-Bauteil kann über der Erstreckung seiner Wand unterschiedliche Wanddicken aufweisen oder auch Auskragungen, Durchlässe etc.. Ein bevorzugter Faservorformling weist daher insbesondere im Bereich der mindestens einen ersten Zone unterschiedliche Wanddicken auf.

Damit kann der erfindungsgemäße Faservorformling bzw. das erfindungsgemäße Verbundwerkstoff-Bauteil in einer Vielzahl von verschiedenen Ausgestaltungen vorliegen. Durch flexible Steuerung der ersten und zweiten Zonen zueinander kann eine einfache Anpassung an die Beanspruchungen im Bauteil erfolgen. So kann je nach Beanspruchungslage auch eine Anpassung durch Erhöhung der Wanddicke über zusätzliche Anteile an ersten Zonen, d.h. durch Zugabe von Verstärkungsbündeln erfolgen. Ebenso ist in spezifischen Bereichen eine Verstärkung über zweite Zonen mit kraftflussorientierten Faserbändern möglich. Dabei kann je nach Bauteil bzw. je nach Faservorformling der Anteil erster Zonen mit Verstärkungsfaserbündeln gegenüber dem Anteil zweiter Zonen mit Faserbändern aus Verstärkungsgarnsträngen überwiegen oder umgekehrt. Maßgeblich für die diesbezügliche Ausgestaltung sind die prognostizierten Belastungen im fertigen Bauteil sowie die zu erreichenden Ziele hinsichtlich z.B. Wandstärken, Gewicht, Volumen, usw. und nicht zuletzt auch hinsichtlich der Fertigungskosten des Bauteils.

Die Erfindung wird anhand der nachfolgenden Figuren beispielhaft näher erläutert, wobei die Figuren keinerlei einschränkenden Charakter haben sollen. Es zeigen in vereinfachter schematischer Darstellung:
Fig. 1: eine Draufsicht auf einen erfindungsgemäßen Faservorformling in Gestalt eines gekrümmten Kalottensegments.
Fig. 2: einen Querschnitt durch das in Fig. 1 gezeigte Faservorformling-Segment entlang der Linie A - A.

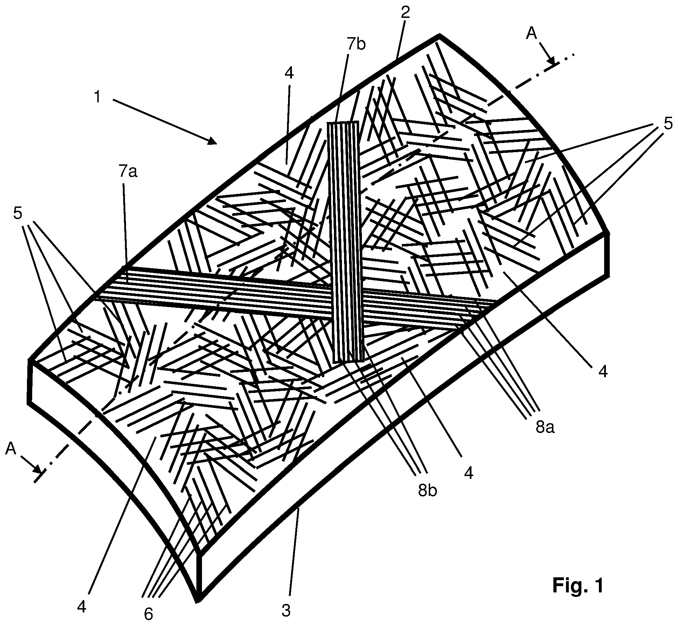

Figur 1 zeigt schematisch einen Faservorformling 1 in Gestalt eines gekrümmten Kalottensegments mit einer ersten Oberfläche 2 und einer zweiten Oberfläche 3 und einer sich zwischen den Oberflächen erstreckenden Dicke. Bei Draufsicht auf die erste Oberfläche 2 sind erste Zonen 4 aus Verstärkungsfaserbündeln 5 erkennbar, die in unterschiedliche Richtungen im Mittel isotrop orientiert sind. Die Verstärkungsfaserbündel 5 sind aus zueinander parallelen Kurzschnittverstärkungsfilamenten 6 aufgebaut, wobei die Anzahl der Verstärkungsfaserfilamente im Bündel im Bereich von 500 bis 50.000 liegen kann. Die Verstärkungsfaserbündel 5 sind mit einer ersten Harzzusammensetzung versehen, wodurch eine gute Haftung der Verstärkungsfaserbündel untereinander und erzielt wird und der Faservorformling eine genügende Stabilität für die weitere Handhabung erhält.

Im vorliegenden Beispiel weist der Faservorformling 1 an seiner ersten Oberfläche 2 zwei zweite Zonen 7a, 7b in Form von Faserbändern auf, die aus unidirektional ausgerichteten Verstärkungsgarnsträngen 8a, 8b bestehen. Im dargestellten Beispiel erstreckt sich die zweite Zone 7a über die Oberfläche 2 von einer Kante zur gegenüberliegenden Kante, während die zweite Zone 7b nur über ein Segment der Oberfläche verläuft und innerhalb der Wand endet. Die Verstärkungsgarnstränge 8a, 8b der zweiten Zonen 7a, 7b sind in unterschiedliche Richtungen orientiert und zu keiner der Kanten des Faservorformlings parallel ausgerichtet.

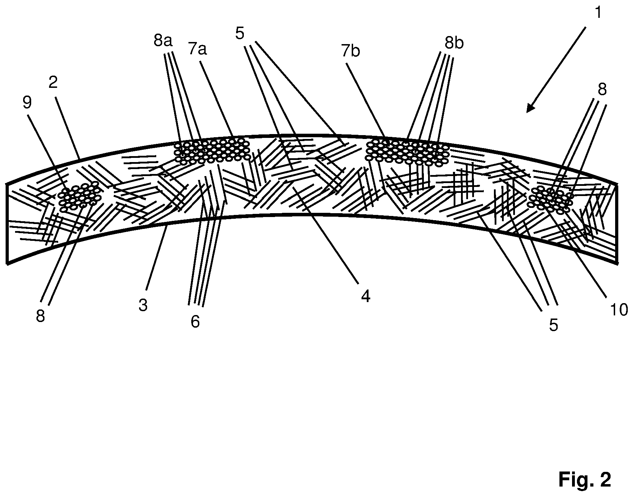

Fig. 2 zeigt einen Querschnitt durch das in Fig. 1 schematisch dargestellte Faservorformling-Segment. Daher sind gleiche Teile auch mit gleichen Bezugszeichen versehen. Der Faservorformling 1 liegt als gekrümmtes Segment mit einer ersten Oberfläche 2 und einer zweiten Oberfläche 3 vor, zwischen denen sich die Dicke der Wand des Faservorformlings erstreckt. Die Wand ist aus erster Zone 4 und zweiten Zonen 7a, 7b, 9, 10 aufgebaut, wobei in der Querschnittsdarstellung deutlich wird, dass die erste Zone 4 aus Verstärkungsfaserbündeln 5 einen durchgehenden Bereich ausbildet und als kontinuierliche Phase bezeichnet werden kann. Die zweiten Zonen 7a, 7b, 9, 10 hingegen sind als diskrete Bereiche in der zweiten Zone eingebettet. In Fig. 2 sind dabei außer den auch in Fig. 1 gezeigten Zonen 7a, 7b an der ersten Oberfläche 2 zwei weitere zweite Zonen 9, 10 im Wandinneren dargestellt, die von der ersten Zone 4 vollständig umhüllt sind. Die zweiten Zonen 7a, 7b, 9, 10 sind aus Verstärkungsgarnsträngen 8, 8a, 8b aufgebaut, die in mehreren Lagen übereinander angeordnet sind.

Der in Fig. 1 und 2 dargestellte Faservorformling weist eine relativ große Dicke auf. Daher sind bei diesem Beispiel auch in der Querschnittsdarstellung die Verstärkungsfaserbündel 5 über dem Wandquerschnitt im wesentlichen isotrop orientiert.

## Patentansprüche

1. Faservorformling zur Herstellung von Faserverbundstrukturen, dessen Wand aus Verstärkungsfasern aufgebaut ist,
- wobei die Wand eine erste Oberfläche und eine der ersten Oberfläche gegenüberliegende zweite Oberfläche und eine sich zwischen den Oberflächen erstreckende Dicke besitzt und durch Kanten begrenzt ist,
- wobei die Wand mindestens eine erste Zone aus eine erste Harzzusammensetzung aufweisenden Verstärkungsfaserbündeln und mindestens eine zweite Zone aus mindestens einem Faserband, bestehend aus mindestens einem eine zweite Harzzusammensetzung aufweisenden, unidirektional ausgerichteten Verstärkungsgarnstrangumfasst,
- wobei die Verstärkungsfaserbündel in der mindestens einen ersten Zone in einer Betrachtungsrichtung parallel zur Dickenerstreckung in unterschiedliche Raumrichtungen zueinander orientiert sind,
- wobei jedes Verstärkungsfaserbündel aus parallel zueinander ausgerichteten Verstärkungsfaserfilamenten besteht, eine Länge im Bereich von 3 bis 50 mm hat und die erste Harzzusammensetzung in einer Konzentration im Bereich von 1 bis 10 Gew.-%, bezogen auf das Fasergewicht, enthält,
- wobei die Wand des Faservorformlings einen Anteil an Verstärkungsfasern von mehr als 35 Vol.-% aufweist und
- wobei die mindestens eine zweite Zone in einer Betrachtungsrichtung senkrecht zur Dickenerstreckung der Wand einen diskreten Bereich ausbildet und mindestens ein Faserband an mindestens einem seiner Enden innerhalb der Wand endet.

2. Faservorformling nach Anspruch 1, **dadurch gekennzeichnet, dass** seine Wand mindestens zwei Faserbänder umfasst und die Orientierung des mindestens einen unidirektional ausgerichteten Verstärkungsgarnstrangs mindestens eines Faserbands gegenüber der Orientierung des mindestens einen unidirektional ausgerichteten Verstärkungsgarnstrangs eines anderen Faserbands verschieden ist.

3. Faservorformling nach einem oder mehreren der Ansprüche 1 oder 2, **dadurch gekennzeichnet, dass** der mindestens eine unidirektional ausgerichtete Verstärkungsgarnstrang mindestens eines Faserbands zu keiner der Kanten parallel ausgerichtet ist.

4. Faservorformling nach einem oder mehreren der Ansprüche 1 bis 3, **dadurch gekennzeichnet, dass** die Verstärkungsfasern der Verstärkungsfaserbündel und/oder der Verstärkungsgarnstränge des mindestens einen Faserbandes Kohlenstofffasern sind.

5. Faservorformling nach einem oder mehreren der Ansprüche 1 bis 4, **dadurch gekennzeichnet, dass** die mindestens eine erste Zone innerhalb der Wand einen kontinuierlichen Bereich aus Verstärkungsfaserbündeln ausbildet und die Wand mindestens eine in und/oder auf dem kontinuierlichen Bereich aus Verstärkungsfaserbündeln angeordnete diskrete zweite Zone umfasst.

6. Faservorformling nach einem oder mehreren der Ansprüche 1 bis 5, **dadurch gekennzeichnet, dass** jedes Verstärkungsfaserbündel eine Länge im Bereich von 10 bis 50 mm hat.

7. Faservorformling nach einem oder mehreren der Ansprüche 1 bis 6, **dadurch gekennzeichnet, dass** die Wand mehrere Gruppen von Verstärkungsfaserbündeln mit voneinander verschiedenen Längen aufweist.

8. Faservorformling nach einem oder mehreren der Ansprüche 1 bis 7, **dadurch gekennzeichnet, dass** jedes Verstärkungsfaserbündel 500 bis 24000 Verstärkungsfaserfilamente aufweist.

9. Faservorformling nach einem oder mehreren der Ansprüche 1 bis 8, **dadurch gekennzeichnet, dass** die Wand unterschiedliche Gruppen von Verstärkungsfaserbündeln mit voneinander verschiedenen Anzahlen von Verstärkungsfaserfilamenten aufweist.

10. Faservorformling nach einem oder mehreren der Ansprüche 1 bis 9, **dadurch gekennzeichnet, dass** die Wand in der mindestens einen ersten Zone einen Anteil an Verstärkungsfasern von mindestens 45 Vol.-% aufweist.

11. Faservorformling nach einem oder mehreren der Ansprüche 1 bis 10, **dadurch gekennzeichnet, dass** die Verstärkungsfaserbündel die erste Harzzusammensetzung in einer Konzentration im Bereich von 2 bis 5 Gew.-%, bezogen auf den Faseranteil, enthalten.

12. Faservorformling nach einem oder mehreren der Ansprüche 1 bis 11, **dadurch gekennzeichnet, dass** das mindestens eine Faserband aus mehreren nebeneinander angeordneten Verstärkungsgarnsträngen besteht.

13. Faservorformling nach einem oder mehreren der Ansprüche 1 bis 12, **dadurch gekennzeichnet, dass** das mindestens eine Faserband eine Länge von mindestens 7 cm aufweist.

14. Faservorformling nach einem oder mehreren der Ansprüche 1 bis 13, **dadurch gekennzeichnet, dass** das mindestens eine Faserband die zweite Harzzusammensetzung in einer Konzentration von 1 bis 10 Gew.-%, bezogen auf den Faseranteil, aufweist.

15. Faservorformling nach einem oder mehreren der Ansprüche 1 bis 14, **dadurch gekennzeichnet, dass** die erste Harzzusammensetzung und die zweite Harzzusammensetzung gleich sind.

16. Verbundwerkstoff-Bauteil, herstellbar aus einem Faservorformling gemäß einem oder mehreren der Ansprüche 1 bis 15.

17. Verbundwerkstoff-Bauteil, dessen Wand aus in einer Polymermatrix eingebetteten Verstärkungsfasern aufgebaut ist,
- wobei die Wand eine erste Oberfläche und eine der ersten Oberfläche gegenüberliegende zweite Oberfläche und eine sich zwischen den Oberflächen erstreckende Dicke besitzt und durch Kanten begrenzt ist,
- wobei die Wand mindestens eine erste Zone aus Verstärkungsfaserbündeln und mindestens eine zweite Zone aus mindestens einem Faserband, bestehend aus mindestens einem unidirektional ausgerichteten Verstärkungsgarnstrang, umfasst,
- wobei die Verstärkungsfaserbündel in der mindestens einen ersten Zone in einer Betrachtungsrichtung parallel zur Dickenerstreckung in unterschiedliche Raumrichtungen zueinander orientiert sind,
- wobei jedes Verstärkungsfaserbündel aus parallel zueinander ausgerichteten Verstärkungsfaserfilamenten besteht und eine Länge im Bereich von 3 bis 50 mm hat,
- wobei die Wand des Verbundwerkstoff-Bauteils einen Anteil an Verstärkungsfasern von mehr als 35 Vol.-% aufweist und
- wobei die mindestens eine zweite Zone in einer Betrachtungsrichtung senkrecht zur Dickenerstreckung der Wand einen diskreten Bereich ausbildet und mindestens ein Faserband an mindestens einem seiner Enden innerhalb der Wand endet.

## Claims

1. A fiber preform for producing fiber composite structures, the wall thereof being made from reinforcing fibers,
- wherein the wall has a first surface, a second surface lying opposite the first surface and a thickness extending between the surfaces, and is limited by edges,
- wherein the wall comprises at least one first zone made from reinforcing fiber bundles having a first resin composition and at least one second zone made from at least one fiber sliver consisting of at least one unidirectionally directed reinforcing yarn strand having a second resin composition,
- wherein the reinforcing fiber bundles in the at least one first zone are oriented in differing spatial directions from each other when viewed in a direction parallel to the thickness extension,
- wherein each reinforcing fiber bundle consists of reinforcing fiber filaments directed parallel to each other, has a length in the range from 3 to 50 mm, and contains the first resin composition in a concentration in the range from 1 to 10 wt.% relative to the fiber weight,
- wherein the wall of the fiber preform has a proportion of reinforcing fibers of greater than 35 vol.%, and
- wherein the at least one second zone forms a discrete region when viewed in a direction perpendicular to the thickness extension of the wall and at least one fiber sliver ends with at least one end thereof inside of the wall.

2. A fiber preform according to Claim 1, **characterized in that** the wall thereof comprises at least two fiber slivers and the orientation of the at least one unidirectionally directed reinforcing yarn strand of at least one fiber sliver is different from the orientation of the at least one unidirectionally directed reinforcing yarn strand of another fiber sliver.

3. A fiber preform according to one of more of Claims 1 or 2, **characterized in that** the at least one unidirectionally directed reinforcing yarn strand of at least one fiber sliver is not directed parallel to any of the edges.

4. A fiber preform according to one or more of Claims 1 to 3, **characterized in that** the reinforcing fibers of the reinforcing fiber bundles and/or the reinforcing yarn strands of the at least one fiber sliver are carbon fibers.

5. A fiber preform according to one or more of Claims 1 to 4, **characterized in that** the at least one first zone inside of the wall comprises a continuous region formed from reinforcing fiber bundles and the wall comprises at least one discrete second zone arranged in and/or on the continuous region made from reinforcing fiber bundles.

6. A fiber preform according to one or more of Claims 1 to 5, **characterized in that** each reinforcing fiber bundle has a length in the range from 10 to 50 mm.

7. A fiber preform according to one or more of Claims 1 to 6, **characterized in that** the wall has a plurality of groups of reinforcing fiber bundles having lengths different from each other.

8. A fiber preform according to one or more of Claims 1 to 7, **characterized in that** each reinforcing fiber bundle has 500 to 24,000 reinforcing fiber filaments.

9. A fiber preform according to one or more of Claims 1 to 8, **characterized in that** the wall has different groups of reinforcing fiber bundles having different numbers of reinforcement fiber filaments from each other.

10. A fiber preform according to one or more of Claims 1 to 9, **characterized in that** the wall in the at least one first zone has a proportion of reinforcing fibers of at least 45 vol.%.

11. A fiber preform according to one or more of Claims 1 to 10, **characterized in that** the reinforcing fiber bundles contain the first resin composition in a concentration in the range from 2 to 5 wt.% in relation to the fiber proportion.

12. A fiber preform according to one or more of Claims 1 to 11, **characterized in that** the at least one fiber sliver consists of a plurality of reinforcing fiber strands arranged next to each other.

13. A fiber preform according to one or more of Claims 1 to 12, **characterized in that** the at least one fiber sliver has a length of at least 7 cm.

14. A fiber preform according to one or more of Claims 1 to 13, **characterized in that** the at least one fiber sliver has the second resin composition in a concentration from 1 to 10 wt.% in relation to the fiber proportion.

15. A fiber preform according to one or more of Claims 1 to 14, **characterized in that** the first resin composition and the second resin composition are identical.

16. A composite material component that can be produced from a fiber preform according to one or more of Claims 1 to 15.

17. A composite material component, the wall thereof being constructed from reinforcing fibers embedded in a polymer matrix,
- wherein the wall has a first surface, a second surface lying opposite the first surface and a thickness extending between the surfaces, and is limited by edges,
- wherein the wall comprises at least one first zone made from reinforcing fiber bundles and at least one second zone made from at least one fiber sliver consisting of at least one unidirectionally directed reinforcing yarn strand,
- wherein the reinforcing fiber bundles in the at least one first zone are oriented in differing spatial directions from each other when viewed in a direction parallel to the thickness extension,
- wherein each reinforcing fiber bundle consists of reinforcing fiber filaments directed parallel to each other and has a length in the range from 3 to 50 mm,
- wherein the wall of the composite material component has a proportion of reinforcing fibers of greater than 35 vol.%, and
- wherein the at least one second zone forms a discrete region when viewed in a direction perpendicular to the thickness extension of the wall and at least one fiber sliver ends with at least one end thereof inside of the wall.

## Revendications

1. Préforme fibreuse destinée à la réalisation de structures composites renforcées par fibres, dont la paroi est constituée de fibres de renforcement,
- où la paroi possède une première surface et une deuxième surface, située en vis-à-vis de la première surface, et une épaisseur s'étendant entre les surfaces, et est délimitée par des arêtes,
- où la paroi comprend au moins une première zone composée de faisceaux de fibres de renforcement présentant un premier composé de résine et au moins une deuxième zone composée d'au moins un ruban de fibres, constitué d'au moins un brin de fils de renforcement présentant un deuxième composé de résine et orienté de façon unidirectionnelle,
- où les faisceaux de fibres de renforcement dans la première zone, au nombre d'au moins une, sont orientés, dans une direction d'observation parallèle à l'étendue en épaisseur, dans des directions spatiales différentes les uns par rapport aux autres,
- où chaque faisceau de fibres de renforcement est composé de filaments de fibres de renforcement orientés parallèlement les uns aux autres, présente une longueur comprise dans la plage allant de 3 à 50 mm et contient le premier composé de résine en une concentration comprise dans la plage allant de 1 à 10 % en poids, rapporté au poids de fibre,
- où la paroi de la préforme fibreuse présente une proportion de fibres de renforcement de plus de 35 % en volume, et
- où la deuxième zone, au nombre d'au moins une, forme une zone séparée dans une direction d'observation perpendiculaire à l'étendue en épaisseur de la paroi, et au moins un ruban de fibres se termine avec au moins une de ses extrémités à l'intérieur de la paroi.

2. Préforme fibreuse selon la revendication 1, **caractérisée en ce que** sa paroi comprend au moins deux rubans de fibres, et l'orientation du brin de fils de renforcement, au nombre d'au moins un, à orientation unidirectionnelle, d'au moins un ruban de fibres est différente de l'orientation du brin de fils de renforcement, au nombre d'au moins un, à orientation unidirectionnelle, d'un autre ruban de fibres.

3. Préforme fibreuse selon une ou plusieurs des revendications 1 ou 2, **caractérisée en ce que** le brin de fils de renforcement, au nombre d'au moins un, à orientation unidirectionnelle, d'au moins un ruban de fibres n'est orienté parallèlement à aucune des arêtes.

4. Préforme fibreuse selon une ou plusieurs des revendications 1 à 3, **caractérisée en ce que** les fibres de renforcement des faisceaux de fibres de renforcement et/ou des brins de fils de renforcement du ruban de fibres, au nombre d'au moins un, sont des fibres de carbone.

5. Préforme fibreuse selon une ou plusieurs des revendications 1 à 4, **caractérisée en ce que** la première zone, au nombre d'au moins une, forme à l'intérieur de la paroi une zone continue de faisceaux de fibres de renforcement, et la paroi comprend au moins une deuxième zone séparée, disposée dans et/ou sur la zone continue composée de faisceaux de fibres de renforcement.

6. Préforme fibreuse selon une ou plusieurs des revendications 1 à 5, **caractérisée en ce que** chaque faisceau de fibres de renforcement a une longueur comprise dans la plage allant de 10 à 50 mm.

7. Préforme fibreuse selon une ou plusieurs des revendications 1 à 6, **caractérisée en ce que** la paroi présente plusieurs groupes de faisceaux de fibres de renforcement ayant des longueurs différentes les uns des autres.

8. Préforme fibreuse selon une ou plusieurs des revendications 1 à 7, **caractérisée en ce que** chaque faisceau de fibres de renforcement présente 500 à 24 000 filaments de fibres de renforcement.

9. Préforme fibreuse selon une ou plusieurs des revendications 1 à 8, **caractérisée en ce que** la paroi présente différents groupes de faisceaux de fibres de renforcement avec des nombres de filaments de fibres de renforcement différents les uns des autres.

10. Préforme fibreuse selon une ou plusieurs des revendications 1 à 9, **caractérisée en ce que** dans la première zone, au nombre d'au moins une, la paroi présente une proportion de fibres de renforcement d'au moins 45 % en volume.

11. Préforme fibreuse selon une ou plusieurs des revendications 1 à 10, **caractérisée en ce que** les faisceaux de fibres de renforcement contiennent le premier composé de résine en une concentration comprise dans la plage allant de 2 à 5 % en poids par rapport à la proportion de fibres.

12. Préforme fibreuse selon une ou plusieurs des revendications 1 à 11, **caractérisée en ce que** le ruban de fibres, au nombre d'au moins un, est composé de plusieurs brins de fils de renforcement disposés les uns à côté des autres.

13. Préforme fibreuse selon une ou plusieurs des revendications 1 à 12, **caractérisée en ce que** le ruban de fibres, au nombre d'au moins un, présente une longueur d'au moins 7 cm.

14. Préforme fibreuse selon une ou plusieurs des revendications 1 à 13, **caractérisée en ce que** le ruban de fibres, au nombre d'au moins un, comprend le deuxième composé de résine en une concentration allant de 1 à 10 % en poids, par rapport à la proportion en fibres.

15. Préforme fibreuse selon une ou plusieurs des revendications 1 à 14, **caractérisée en ce que** le premier composé de résine et le deuxième composé de résine sont identiques.

16. Elément en matériau composite pouvant être réalisé à partir d'une préforme fibreuse selon une ou plusieurs des revendications 1 à 15.

17. Elément en matériau composite, dont la paroi est constituée de fibres de renforcement noyées dans une matrice polymère,
- où la paroi possède une première surface et une deuxième surface, située en vis-à-vis de la première surface, et une épaisseur s'étendant entre les surfaces, et est délimitée par des arêtes,
- où la paroi comprend au moins une première zone composée de faisceaux de fibres de renforcement et au moins une deuxième zone composée d'au moins un ruban de fibres, constitué d'au moins un brin de fils de renforcement orienté de façon unidirectionnelle,
- où les faisceaux de fibres de renforcement dans la première zone, au nombre d'au moins une, sont orientés, dans une direction d'observation parallèle à l'étendue en épaisseur, dans des directions spatiales différentes les uns par rapport aux autres,
- où chaque faisceau de fibres de renforcement est composé de filaments de fibres de renforcement orientés parallèlement les uns aux autres, et présente une longueur dans la plage allant de 3 à 50 mm,
- où la paroi de l'élément en matériau composite présente une proportion de fibres de renforcement de plus de 35 % en volume, et
- où la deuxième zone, au nombre d'au moins une, forme une zone séparée dans une direction d'observation perpendiculaire à l'étendue en épaisseur de la paroi, et au moins un ruban de fibres se termine avec au moins une de ses extrémités à l'intérieur de la paroi.
